Europäisches Patentamt

**European Patent Office**

Office européen des brevets

(19)

(11) Numéro de publication: **0 109 337**
A2

(12) ## DEMANDE DE BREVET EUROPEEN

(21) Numéro de dépôt: **83402158.6**

(22) Date de dépôt: **07.11.83**

(51) Int. Cl.³: **G 06 F 15/10**, G 06 F 15/16,
G 06 F 3/04

(30) Priorité: **15.11.82 FR 8219042**

(43) Date de publication de la demande: **23.05.84**
**Bulletin 84/21**

(84) Etats contractants désignés: **BE CH DE GB IT LI**

(71) Demandeur: **Jutier, Pierre, 77, rue de la Verrerie,**
**F-75004 Paris (FR)**

(72) Inventeur: **Jutier, Pierre, 77, rue de la Verrerie,**
**F-75004 Paris (FR)**

(74) Mandataire: **Mongrédien, André et al, c/o SOCIETE DE**
**PROTECTION DES INVENTIONS 25, rue de Ponthieu,**
**F-75008 Paris (FR)**

(54) **Dispositif informatique à multi micro-ordinateur pour le traitement d'images.**

(57) L'invention concerne un multi-micro-ordinateur de traitement d'images avec un bus (BG) où se branchent en parallèle des micro-ordinateurs esclaves (PE$_i$) entre lesquels est répartie la mémoire image, un micro-ordinateur maître (PM) et un maître secondaire d'entrée/sortie d'images (PMS). A ce bus se superpose une structure de commande et de supervision en étoile, centrée alternativement sur le micro-ordinateur maître et sur le maître secondaire, comprenant des lignes de sélection (SP$_i$) vers les lignes d'information (ST$_i$) en provenance de ceux-ci et des lignes bidirectionnelles (AA$_i$) pour la partition de la mémoire image dans un sens et pour des alertes individuelles dans l'autre. Les signaux d'interruption (INT1, INT2) envoyés sur le bus et les signaux de sélection (SP$_i$) sont obtenus par décodage des addresses de segment du processeur segmenté PR.

Le brevet concerne d'une façon générale les dispositifs informatiques de traitement d'images et plus spécifiquement les multi-micro-ordinateurs destinés à l'analyse, la synthèse et la reconstruction d'images.

Avant toute chose et pour limiter les risques de confusion qui sont importants dans une branche de la technique en pleine évolution, précisons la portée de quelques termes qui seront employés systématiquement par la suite. Même si le terme micro-ordinateur désigne encore le plus souvent une machine de quelque importance, nous l'adopterons pour un ensemble éventuellement très petit comprenant le plus souvent un organe de calcul et de traitement logique, des organes de mémoire, des éléments logiques, des barrières de bus, etc... apte à communiquer avec d'autres ensembles de même nature. Toute confusion étant écartée dans ce texte nous l'abrégerons le plus souvent en "ordinateur". Le mot usuel de processeur sera réservé à une partie de ce micro-ordinateur. Par barrière nous entendons un dispositif qui, intercalé sur un bus peut être commandé pour autoriser ou interdire le passage des signaux, éventuellement dans un sens ou dans l'autre. Une telle barrière exerce le plus souvent, en plus de son rôle logique, un effet amplificateur. Enfin, le plus souvent, elle est constituée par un ou plusieurs organes dits à trois états qui amènent leurs sorties à haute impédance lorsqu'ils sont en position de fermeture. Le terme de signal sera utilisé strictement au sens de la logique binaire usuelle. Enfin, nous dirons qu'un processus est instantané lorsqu'il se déroule en un temps du même ordre que le délai de transfert de la technologie utilisée.

Pour l'état de la technique, nous nous réfèrerons notamment à la demande de brevet

SP 2300 DC

n° 79 22630 déposée en France le 11 septembre 1979 (n° de publication : 24 65273).

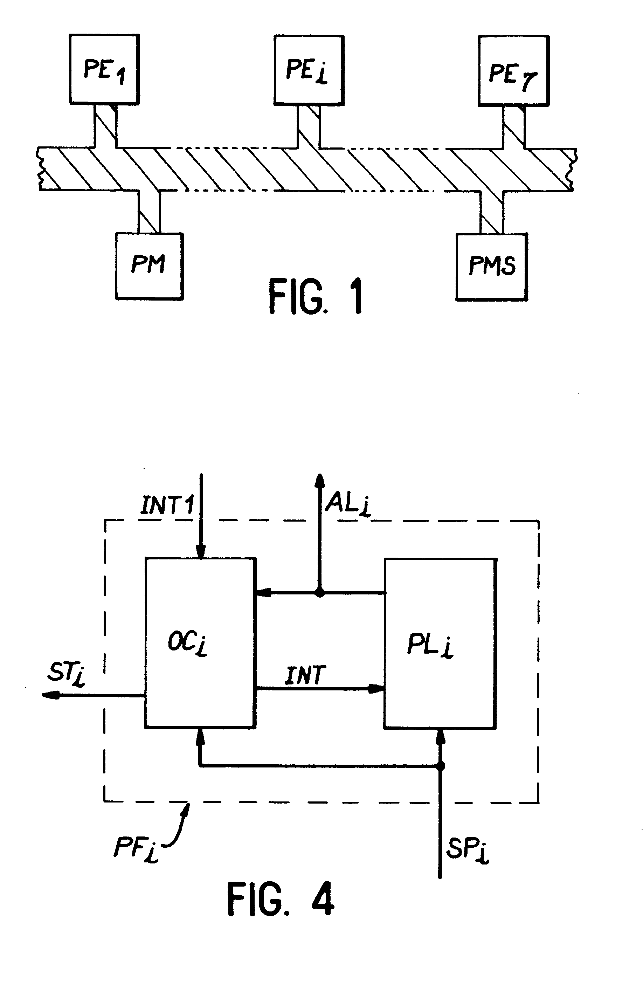

Un multi-micro-ordinateur de traitement d'images comprend typiquement (figure 1) un certain nombre d'ordinateurs en parallèle, dits ordinateurs esclaves, en abrégé esclaves $PE_1...PE_i...PE_7$ entre lesquels est répartie la mémoire image. Un dispositif de commande, dit ordinateur maître PM commande et supervise les esclaves. Un tel dispositif comprend encore des organes d'entrée/sortie spécialisés pour saisir une image à partir d'une caméra vidéo, par exemple, et restituer cette image ou une image transformée sur un moniteur TV. Ces organes peuvent être considérés globalement comme un maître secondaire PMS. Le tout est organisé autour d'un bus BG.

Etant donné la tendance actuelle à une intégration de plus en plus poussée des composants électroniques dans un micro-circuit unique, on est amené à envisager des architectures de ce type où le nombre d'ordinateurs en parallèle pourrait devenir très grand, en tout cas beaucoup plus important que le nombre de huit évoqué plus haut. La propriété fondamentale d'un bus est d'être constitué par un nombre de conducteurs (de données, d'adresses, de commande) rigoureusement constant et indépendant du nombre d'ordinateurs raccordés. Cette caractéristique est évidemment d'autant plus intéressante que le nombre d'ordinateurs est plus élevé ; et si l'on se place dans l'hypothèse d'un fonctionnement strictement parallèle des esclaves, exécutant tous en même temps la même tâche, une organisation autour d'un tel bus, à l'exclusion de toute autre chose peut être suffisante.

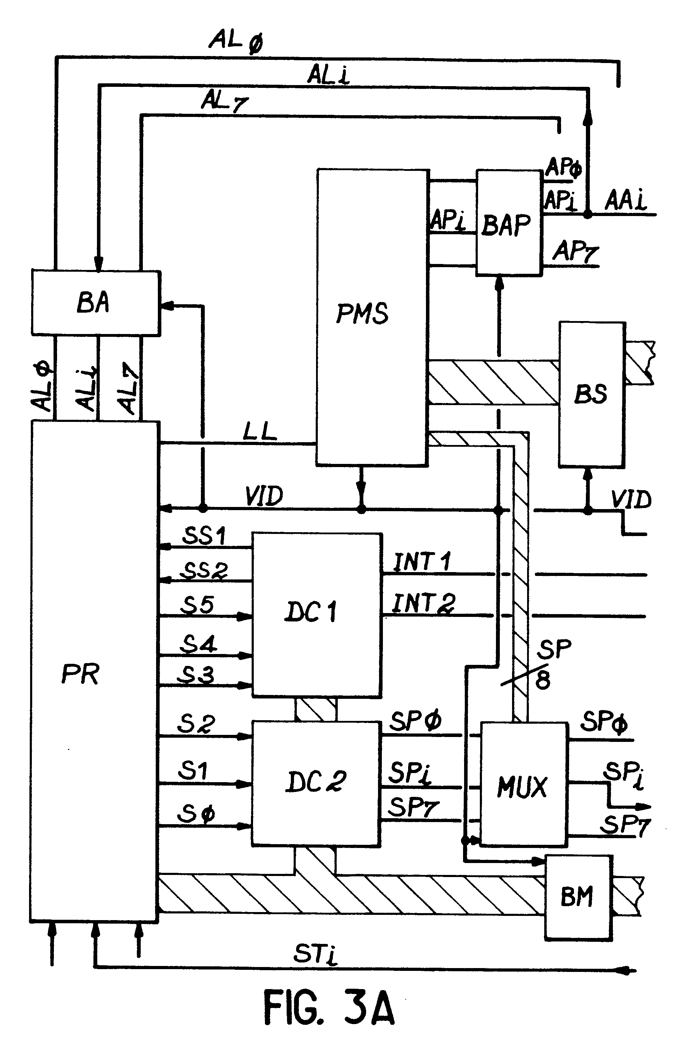

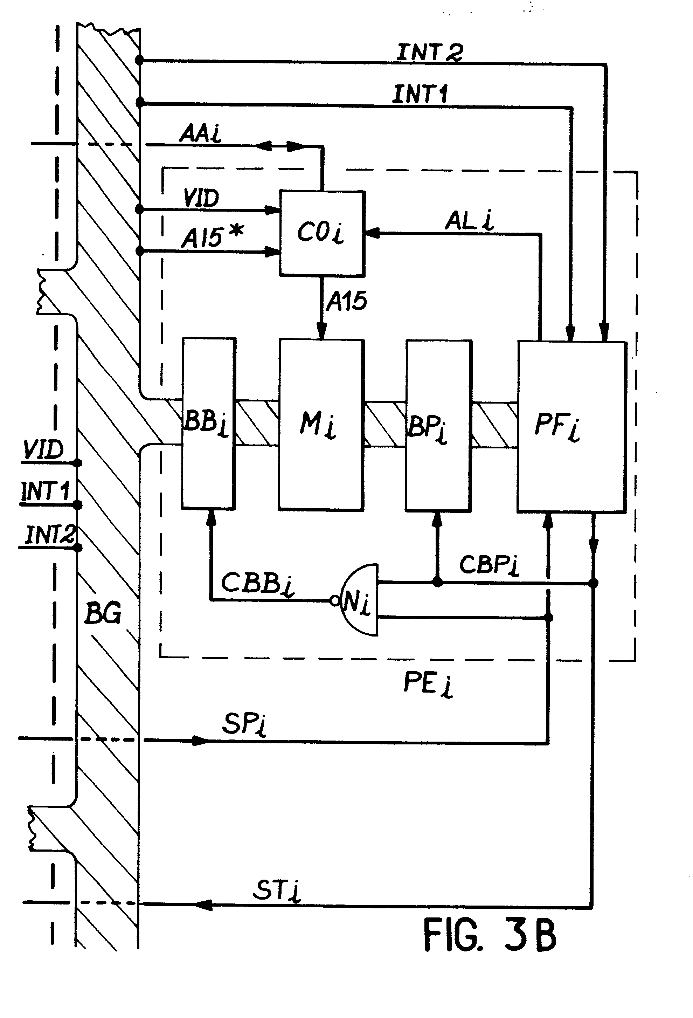

Notamment, le bus décrit aux lignes 15 à 28 de la page 3 du brevet précité permet un tel

0109337

fonctionnement que l'on rappellera en se référant à la figure 3 dudit brevet qui montre un seul esclave comprenant un processeur 71, une mémoire 70 et des barrières 72 et 73. La ligne "reset" 182 (appartenant au bus) provoque par l'intermédiaire du processeur 71 et des lignes 711 et 710 l'ouverture de la barrière 73 et la fermeture de la barrière 72 grâce à quoi des données et/ou un programme peuvent être chargés dans la mémoire 70. Ensuite, la ligne d'interruption 181 (appartenant également au bus) commande la manoeuvre inverse qui permet au processeur d'effectuer le traitement requis. Le maître supervise le déroulement du traitement en scrutant les barrières 73 des différents esclaves.

Les barrières 73 sont adressées par leur "nom" qui leur est communiqué à partir du maître au moyen de la liaison 701 qui est individuelle et ne saurait donc faire partie du bus. On notera que cet adressage par nom convient mal lorsque le nombre des esclaves est grand. En effet, n fils permettent de distinguer $2^n$ esclaves. On voit que chaque esclave reçoit un fil s'il y a deux processeurs, deux fils s'il y en a quatre,... six fils s'il y en a soixante-quatre (soit 384 fils en tout, en plus du bus), etc... Toutefois, ce dispositif n'est pas indispensable et la barrière 73 peut contenir son "nom" a priori, ce qui nous conduit à un dispositif simplifié où toutes les communications entre les esclaves (supposés nombreux) et le ou les maîtres sont assurées par le bus, à l'exclusion de toute autre chose.

Si l'on veut faire fonctionner un tel multi-ordinateur de façon complètement "désynchronisée", ce qui est l'un des buts de l'invention, il faut prévoir des moyens de commande sélectifs aboutissant non plus aux barrières de bus 73 mais aux processeurs proprement dits 71. Pour s'en tenir au principe du bus on pourrait recourir à la généralisation du "mot de commande" signalé ligne 36 de la page 3 du brevet précité. Ce mot de commande circulerait alors sur un bus aboutissant en parallèle à des décodeurs adéquats des esclaves. Ce système qui est parfait pour activer "un parmi tous" devient vite confus s'il s'agit d'activer "quelques-uns parmi d'autres". Et si ce choix des "quelques-uns" doit pouvoir être arbitraire, on est ramené à la seule solution générale, consistant à placer un conducteur entre le maître et chacun des esclaves, selon une disposition que l'on appellera dorénavant structure en étoile, ou "étoile".

De telles structures en étoile sont en elles-mêmes connues. Elles apparaissent souvent dans la littérature, au moins implicitement (leur organe central étant le plus souvent appelé "contrôleur"), sans détail sur la façon dont elles fonctionnent. L'expédition des "noms" dans le brevet précité fait appel à une telle structure, mais sous une forme dont nous avons vu l'inconvénient et que nous ne considérerons donc pas dans le cadre de la présente invention. Une étoile représentant un nombre de conducteurs proportionnel au nombre d'esclaves, il faut l'utiliser efficacement et ne pas l'employer pour des signaux qui peuvent emprunter le bus. C'est notamment le cas pour les interruptions des processeurs esclaves que l'on peut continuer à envoyer de façon indifférenciée sur le bus (comme dans le brevet antérieur précité) quitte à les faire spécifier localement par la structure en étoile. Nous rejetterons donc comme non efficace l'émission de signaux individuels d'interruption, signalée (mais non revendiquée) lignes 6 à 9, page 10 du brevet précité. Ce choix est dicté notamment par des considérations de vitesse. Une interruption est un phénomène lent nécessitant des dizaines de cycles d'horloge... soit un temps global de l'ordre de la dizaine de microsecondes. Un message envoyé sur un fil peut provoquer instantanément un basculement de barrière, en un temps de l'ordre de la dizaine de nanosecondes. Il y a donc un facteur 1000 entre les deux processus.

De même, en sens inverse, la scrutation des barrières de bus des esclaves par le maître est un procédé en lui-même tout à fait suffisant pour tenir le processeur maître informé. Ce procédé a toutefois un inconvénient majeur : il immobilise pratiquement à temps complet le processeur maître et ne permet donc pas de réaliser dans le dispositif multiordinateur, décrit, une partition comprenant d'une part un certain nombre d'esclaves fonctionnant individuellement et, d'autre part, le maître effectuant un traitement en liaison avec des modules de mémoire non concernés par les esclaves précédents. Or une telle possibilité est justement un des objectifs de l'invention.

D'autre part, le procédé par scrutation suppose le déroulement d'un programme et l'examen cyclique de tous les esclaves. Le temps nécessaire est proportionnel au nombre de ceux-ci. On arrive vite à des centaines de microsecondes. Par contre si toutes les informations sont concentrées par autant de fils que d'esclaves sur le bus de données du maître, quelques instructions suffiront pour avoir une vue de la situation. En outre des moyens logiques simples impossibles dans le cas de la scrutation permettront de provoquer éventuellement des alertes instantanées. Le gain de vitesse pourra être encore

SP 2300 DC

- plus important que dans le cas précédent.

Il sera donc particulièrement intéressant d'obtenir les signaux émis par le processeur maître sur l'étoile, d'une part par programme, pour avoir la plus grande souplesse possible, et d'autre part par les moyens les plus rapides possibles. Dans le cas qui nous intéresse, les processus qui répondent le mieux à cette définition sont les cycles d'accès à la mémoire ou aux organes d'entrée/sortie. Dans les deux cas, les signaux disponibles en tout premier sont les signaux d'adresse. Nous utiliserons donc de préférence ces derniers.

Enfin nous chercherons à tirer partie de l'analogie de principe entre le maître (principal) et les dispositifs d'entrée/sortie, contrôleurs de disque, etc... que nous regroupons sous la rubrique générale de maîtres secondaires. Ces maîtres secondaires ressemblent au maître principal dans la mesure où ils n'ont pas besoin de connaître l'état des esclaves, puisque le maître principal ne les lance qu'à bon escient. De plus, ils peuvent utiliser utilement une ligne de l'étoile pour charger la même information image simultanément en des emplacements différents de deux tranches contiguës de la mémoire image, cela afin d'obtenir un effet de recouvrement qui sera décrit plus loin et qui ne présente pas grand intérêt pour le maître principal. Un maître secondaire sera donc conçu de telle sorte qu'il puisse être substitué au maître principal au centre de l'étoile. Il en utilisera les lignes de sélection exactement comme le maître principal. Par contre, il pourra utiliser en vue du recouvrement (dans le sens maître-esclaves) des conducteurs utilisés par le maître principal dans l'autre sens.

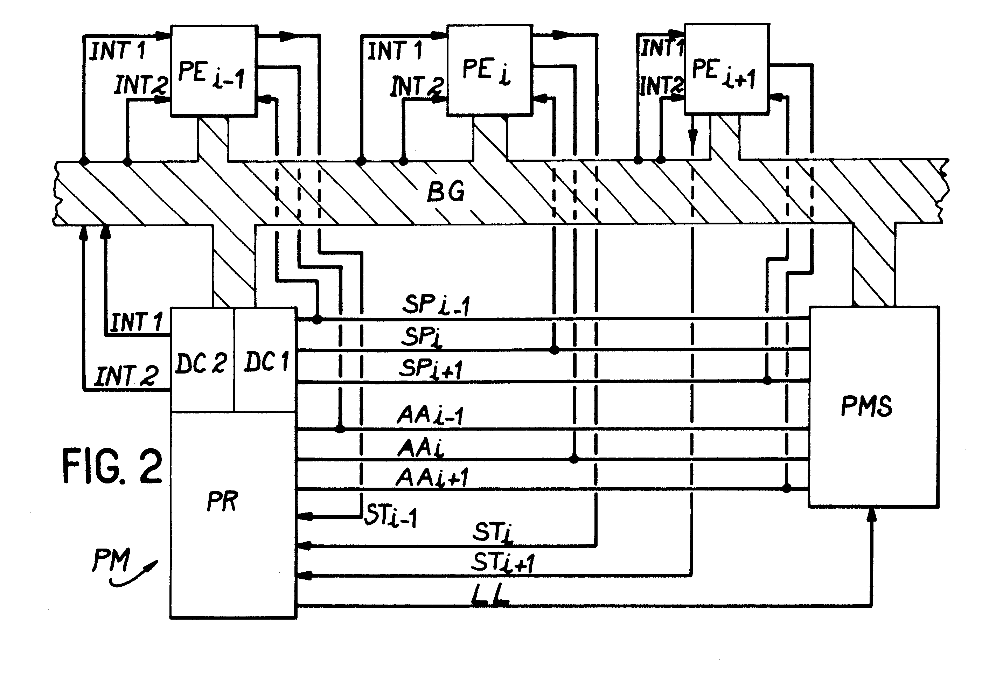

L'invention vise un multimicroordinateur de traitement d'images susceptible d'être subdivisé

SP 2300  DC

en groupes de microordinateurs fonctionnant soit en mode parallèle pur, avec un même programme sur des données différentes, soit en mode désynchronisé, avec des programmes différents sur des données identiques ou différentes, étant entendu que l'ordinateur maître n'est pas nécessairement cantonné dans un rôle de surveillance mais participe effectivement au traitement. L'invention vise plus particulièrement, dans un tel multi-micro-ordinateur une structure de communication et de commande de type mixte bus-étoile la plus performante possible. Nous la décrirons ci-après en nous référant à la figure 2.

Un multi-micro-ordinateur parallèle est organisé autour d'un bus général BG. Un certain nombre d'ordinateurs dits esclaves dont on voit ici trois exemplaires courants $PE_{i-1}$, $PE_i$ et $PE_{i+1}$ sont tous connectés en parallèle sur ce bus. Leur nombre est quelconque mais dans un mode préféré de réalisation de l'invention, il sera égal à $2^n$, c'est-à-dire 2, ou 4, ou 8, ou 16, etc... Sur ce même bus est connecté un ordinateur maître PM dont on a fait apparaître ici deux éléments importants au sens de l'invention, à savoir les décodeurs DC1 et DC2 reliés organiquement au processeur PR. Sur ce bus peuvent être également branchés des maîtres secondaires PMS qui seront le plus souvent chargés de tâches spécialisées comme l'entrée/sortie des images, le raccordement d'une mémoire de masse contenant éventuellement des données d'images, etc...

Le bus comprend, outre les conducteurs de données et d'adresses selon des dispositions en elles-mêmes bien connues, un certain nombre de conducteurs de commande de caractère général, par exemple des conducteurs d'interruption, et l'on a fait figurer ici deux lignes d'interruption INT1, INT2, qui partent du décodeur DC2 pour aboutir à tous les esclaves $PE_i$.

A cette structure en bus se superpose une structure en étoile, chaque branche de l'étoile allant du maître PM et/ou du maître secondaire PMS (des moyens non figurés ici permettant à l'un ou l'autre de ces maîtres d'occuper alternativement le centre de cette étoile sans être gêné par l'autre) vers un esclave $PE_i$. Chaque branche de l'étoile peut comprendre un ou plusieurs conducteurs unidirectionnels transmettant des messages à destination des escalves, comme les conducteurs de sélection $SP_{i-1}$, $SP_i$, $SP_{i+1}$ qui partent du décodeur DC1, un ou plusieurs autres conducteurs unidirectionnels transmettant des messages en provenance des esclaves $PE_i$, à destination du maître PM, comme les conducteurs d'information d'état $ST_{i-1}$, $ST_i$, $ST_{i+1}$ ; et enfin un ou plusieurs conducteurs bidirectionnels comme les conducteurs $AA_{i-1}$, $AA_i$, $AA_{i+1}$ qui sont reliés centralement à la fois au maître principal PM et au maître secondaire PMS mais qui sont utilisés par exemple dans le sens maître-esclave par le maître secondaire pour obtenir une partition de la mémoire image et un effet de recouvrement qui sera décrit plus loin dans le cadre d'un exemple de réalisation, et qui sont utilisés éventuellement dans l'autre sens par le maître principal, par exemple pour faire transiter des messages d'alerte en provenance de tel ou tel esclave à destination du maître.

Des moyens de liaison LL sont prévus entre le maître principal PM et le maître secondaire PMS, permettant au maître principal PM de déléguer ses pouvoirs au maître secondaire de telle sorte que ce dernier soit en mesure de se substituer au maître au centre de l'étoile.

0109337

Selon l'invention, les décodeurs DC2 et DC1 reçoivent une partie des signaux d'adresse fournis par l'unité centrale du processeur PR, grâce à quoi les signaux de sortie de ces deux décodeurs sont obtenus dans des délais très brefs et les manoeuvres commandées par ces signaux sont normalement exécutées pendant la durée d'un cycle d'accès mémoire (ou éventuellement d'entrée/sortie) standard. On réalise ainsi une extension et une généralisation de la notion d'espace d'adressage et l'on parvient à faire fonctionner un ensemble compliqué et extérieur à l'ordinateur maître dans les mêmes conditions de performance que ce dernier.

Dans un mode préféré de réalisation de l'invention, on utilise pour le processeur PR une machine dite segmentée dans laquelle les signaux d'adresse sont répartis en deux catégories, d'une part des signaux d'adresse de type usuel et d'autre part des signaux d'adresse dits de segment qui sont fournis avant les autres signaux d'adresse, cette particularité étant en général prévue pour faciliter le fonctionnement d'un organe spécial de gestion de mémoire. Dans ce cas, il est particulièrement avantageux de faire parvenir aux décodeurs DC1 et DC2 des signaux d'adresse de segment, grâce à quoi les temps de transfert des décodeurs sont largement inclus dans le délai compris entre la production des adresses de segment et la production des autres adresses et les conditions chronologiques de fonctionnement sont idéales.

Enfin, les décodeurs peuvent utiliser comme organe central des mémoires, et plus particulièrement des mémoires aptes à être rechargées par le processeur PR, grâce à quoi la loi de fonctionnement de ces décodeurs peut être modifiée dynamique-

SP 2300 DC

ment par le programme dudit processeur, ce qui multiplie encore les possibilités d'intervention de ce dernier. On remarquera qu'en ce qui concerne les conducteurs de sélection $SP_i$, par exemple, dont le nombre est égal au nombre des esclaves, il suffira de n signaux d'adresse pour activer individuellement 1 parmi $2^n$ esclaves (donc 3 signaux d'adresse pour 8) sans avoir à recharger la mémoire de décodage. Toute combinaison de signaux de sélection $SP_i$ pourra être obtenue à condition de la placer préalablement dans la mémoire de décodage. On notera que cette facilité permet d'augmenter à volonté le nombre des esclaves sans pour autant utiliser un nombre prohibitif de signaux d'adresse.

On décrira maintenant de façon plus détaillée un exemple particulier de réalisation de l'invention en se référant à la figure 3. L'ordinateur maître est ici décomposé en trois parties à savoir les deux décodeurs DC1 et DC2 et le reste appelé processeur PR. Il n'est pas utile d'individualiser de façon plus précise les autres éléments du processeur PR, par exemple sa mémoire, étant donné que ces détails sont sans rapport direct avec l'invention. Le processeur PR est séparé du bus BG par une barrière BM.

D'autre part, il est relié au maître secondaire PMS par des organes de liaison LL. Ceux-ci comprennent notamment un conducteur par lequel le processeur PR envoie en mode série (au maître secondaire) un caractère PMS indiquant à ce dernier quel programme particulier il doit mettre en oeuvre. Il est ainsi possible de moduler diverses caractéristiques de fonctionnement du maître secondaire : saisie d'une image à partir d'un capteur particulier ; restitution d'images précédemment saisies, reconstrui-

SP 2300 DC

tes ou synthétiques à destination d'un moniteur TV ; choix d'un espace de recouvrement entre deux tranches successives de l'image, reprise dans une mémoire de masse, etc... Le maître secondaire PMS est relié au bus BG par une barrière BS.

Le processeur principal PR envoie au décodeur DC2 trois conducteurs portant les signaux d'adresse de segments de rang inférieur S0, S1 et S2. Ce décodeur en déduit une certaine configuration de signaux émis sur les huit conducteurs $SP_0$,... $SP_i$,... $SP_7$ aboutissant au multiplexeur MUX. Ce dernier reçoit également les signaux correspondants de sélection SP fournis par le maître secondaire PMS. Ce dernier émet aussi sur huit lignes $AP_0$... $AP_i$... $AP_7$ des signaux de partition de la mémoire image qui traversent une barrière BAP, les conducteurs en aval de cette barrière étant connectés à d'autres conducteurs $AL_0$... $AL_i$... $AL_7$, dits conducteurs d'alerte pour donner, au delà, les lignes bidirectionnelles $AA_i$. Les conducteurs $AL_i$ aboutissent d'autre part à la barrière BA les reliant au processeur PR.

Du maître secondaire PMS part une ligne VID dont l'état binaire caractérise les relations entre le maître principal et le maître secondaire. Cette ligne aboutit au maître principal PR, aux quatre barrières BA, BAP, BS et BM et au multiplexeur MUX. Elle est par exemple à l'état haut quand le maître secondaire est inactif, et dans ce cas les barrières BAP et BA sont fermées, les barrières BM et BA sont ouvertes et le multiplexeur MUX transmet à destination des esclaves $PE_i$ les messages sélectifs $SP_i$ en provenance du décodeur DC2. En outre, le processeur PR reçoit effectivement les signaux en provenance des lignes d'alerte $AL_i$. On notera que le multiplexeur MUX peut être réalisé par tous moyens en eux-mêmes connus, par exemple par deux barrières de bus fonctionnant en exclusion. Il est montré globalement pour ne pas surcharger le dessin. Quand la ligne VID est à l'état bas la situation est inversée : les barrières BAP et BS sont ouvertes, les barrières BM et BA sont fermées et le multiplexeur MUX transmet vers les processeurs esclaves $PE_i$ les signaux de sélection SP en provenance du maître secondaire PMS. On notera que ce signal VID assurant ainsi l'exclusion réciproque entre le maître principal et le maître secondaire pourrait fort bien prendre son origine dans le processeur PR. La disposition décrite et illustrée ici a toutefois l'avantage d'économiser un fil. En effet, il faut que le processeur principal PR soit informé de l'état de fonctionnement du maître secondaire PMS et ce résultat est obtenu simplement en surveillant l'état du conducteur VID. Notons enfin que ce dernier est également un conducteur de bus aboutissant de façon indifférenciée à tous les esclaves $PE_i$.

Deux autres conducteurs de bus INT1 et INT2 partent du décodeur DC1 qui reçoit les trois signaux d'adresse de segment S3, S4 et S5 dont le rôle est de fournir, en plus des deux signaux INT1 et INT2 précités, d'autres signaux qui sont orientés vers l'intérieur du processeur PR et servent soit à séparer si besoin est l'espace d'adressage interne du processeur PR de son espace d'adressage externe (à destination des esclaves), soit à fournir des signaux de gestion interne permettant par exemple de recharger les mémoires des décodeurs, de lire les lignes d'état $ST_i$ ou d'alerte $AL_i$, etc... L'intérêt de produire les signaux externes INT1 et INT2 à partir d'adresses de segment réside dans la possibilité qui sera décrite en détail plus loin de les utiliser à deux fins, soit pour des interventions lentes du type interruption, soit pour des interventions instantanées de commutation, la discrimination entre ces deux modes d'intervention étant obtenue au niveau des esclaves par combinaison logique avec les signaux de sélection émanant de l'autre décodeur DC2 et avec les signaux d'alerte résultant du déroulement du programme au sein même des esclaves. Cette combinaison logique entre des signaux de bus d'une part et les signaux d'étoile d'autre part est réalisée dans les conditions optimales de chronologie puisque les sources de ces signaux sont intrinsèquement de même nature.

Sur le bus général BG sont connectés en parallèle les esclaves dont nous ne montrons ici qu'un exemplaire courant $PE_i$. Un tel micro-ordinateur esclave comprend le processeur proprement dit $PF_i$, un module de mémoire $M_i$ qui représente une fraction de la mémoire image globale, une barrière de bus $BB_i$ interposée entre ledit module de mémoire $M_i$ et le bus BG. Une barrière de processeur $BP_i$ interposée entre le module de mémoire $M_i$ et le processeur $PF_i$ et un organe de commutation $CO_i$. Le processeur $PF_i$ comprend notamment des organes propres à assurer la combinaison logique des signaux de commande INT1 et INT2 d'une part et des signaux $AL_i$ et $SP_i$ d'autre part, dont il a été question plus haut et dont on reparlera plus loin en se référant à la figure 4. Le processeur $PF_i$ émet également un signal $ST_i$ destiné d'une part à commander les barrières $BP_i$ et $BB_i$ et d'autre part à informer le processeur maître de l'état de cette commande. L'organe de commutation $CO_i$ est sous contrôle du signal de bus VID et reçoit une ligne bidirectionnelle $AA_i$ du type décrit plus haut, une ligne d'alerte $AL_i$ en prove-

0109337

nance du processeur $PF_i$ et une ligne de bus A15$^*$ et émet à destination du module de mémoire $M_i$ une ligne d'adresse A15 dont le rôle est d'assurer la discrimination entre les deux moitiés de ladite mémoire.

La barrière $BP_i$ est commandée par le signal de commande $CBP_i$ identique au signal $ST_i$. La barrière de bus $BB_i$ est commandée par le signal de commande $CBB_i$ qui est l'intersection logique inversée, par la porte $N_i$, du signal $CBP_i$ et du signal de sélection $SP_i$ en provenance des maîtres. On notera que l'inversion précitée ne saurait être interprétée de façon limitative et qu'elle correspond symboliquement à l'identité des organes constituant les deux barrières $BB_i$ et $BP_i$ et au fait que les deux barrières ne sauraient en aucun cas être ouvertes simultanément. Ce dispositif peut par exemple fonctionner de la manière suivante : en supposant que sous l'effet d'une des lignes de commande, par exemple INT1, le processeur $PF_i$ ait émis un signal $ST_i$ provoquant la fermeture de la barrière $BP_i$, donc mettant en principe le module de mémoire $M_i$ à disposition du maître, il suffira à celui-ci d'activer la ligne $SP_i$ pour provoquer instantanément l'ouverture de la barrière $BB_i$ et ainsi accéder effectivement à ce module de mémoire. Ceci est un exemple de fonctionnement en deux temps : un premier processus, dit d'armement, relativement lent, obtenu par interruption, étant suivi par un processus instantané. INT2 peut provoquer la manoeuvre inverse.

L'organe de commutation $CO_i$ n'a pas a être décrit en détail étant donné que tout homme de l'art saura en imaginer de multiples variantes réalisées à partir d'éléments logiques bien connus, avec éventuellement des sorties à trois états. Pour reprendre la convention adoptée plus haut, quand le signal VID

SP 2300 DC

0109337

est à l'état haut, la sortie A15 reçoit le signal arrivant sur le conducteur A15* grâce à quoi le module de mémoire $M_i$ est adressé individuellement dans les conditions normales. D'autre part le signal émis par le processeur $PF_i$ sur la ligne $AL_i$ est envoyé sur la ligne $AA_i$ et, tout risque de conflit avec le signal $AP_i$ étant exclu puisque la barrière BAP est fermée, ce signal peut parvenir sans encombre au processeur PR.

Inversement, lorsque le signal VID est bas, ce qui correspond à l'état d'activité du maître secondaire, le signal $AP_i$ de partition de mémoire parvenant sur le conducteur $AA_i$ est transmis à la ligne A15 et l'on voit que la partition du module de mémoire $M_i$ peut être réalisée individuellement. Dans ces conditions le maître secondaire a la faculté d'activer simultanément deux esclaves $PE_i$ et $PE_{i+1}$ tout en écrivant dans deux zones différentes de leurs modules de mémoire respectifs $M_i$ et $M_{i+1}$. Plus précisément, le maître secondaire place un niveau haut sur $AP_i$ et un niveau bas sur $AP_{i+1}$. Les données correspondant à la fin d'une tranche de l'image sont alors chargées simultanément dans le haut de la partie supérieure de $M_i$ (leur destination normale) et dans le haut de la partie inférieure de $M_{i+1}$. Le début de la tranche suivante se trouvera placé dans le bas de la moitié supérieure de $M_{i+1}$, donc en contiguïté avec les données de fin de tranche précitées. Cette possibilité est très utile pour pallier les "effets de bord" entre les tranches successives de l'image. La fourniture sélective des $AP_i$ est indispensable car tout doit se faire dans un temps de trame.

La figure 4 illustre un exemple possible de réalisation des organes propres à assurer la com-

SP 2300 DC

binaison logique précédemment invoquée entre les signaux de commande INT1 et INT2 (présents sur le bus) et les signaux d'alerte $AL_i$ et de sélection $SP_i$, présents sur l'étoile.

Le processeur $PF_i$ appartenant à l'esclave $PE_i$ est décomposé en une partie principale $PL_i$ et un organe de commutation $OC_i$ assurant la combinaison logique précitée. L'organe de commutation $OC_i$ est commandé par la ligne d'alerte $AL_i$ en provenance du processeur $PL_i$. Il reçoit la ligne de commande INT1 et le signal de sélection $SP_i$ et il émet le signal d'état et de commande de barrière $ST_i$ ainsi qu'un signal d'interruption proprement dit INT. Dans le mode de fonctionnement de l'esclave qui a été décrit plus haut et où l'initiative revient au maître, la ligne $AL_i$ est inactive et l'organe de commutation $OC_i$ établit la liaison entre la ligne de commande INT1 et la ligne d'interruption proprement dite INT, cela sous contrôle de $SP_i$ qui spécifie si l'interruption concerne ou non l'esclave $PE_i$, et qui dans ce cas autorise l'émission de $ST_i$.

L'intérêt de l'organe de commutation $OC_i$ est de permettre à l'esclave de prendre l'initiative. Si par exemple l'esclave, à l'occasion du déroulement de son programme ou par suite d'une intervention extérieure par d'autres voies qui n'ont pas à être précisées ici, constate qu'il a besoin d'une intervention urgente du maître, par exemple, pour transmettre un résultat de calcul à un autre esclave, il activera la ligne $AL_i$, ce qui provoquera les actions suivantes : quel que soit l'état de la ligne $SP_i$, le signal $ST_i$ de manoeuvre des barrières est émis immédiatement. L'interruption INT est bloquée car devenue sans objet, l'esclave étant la source de l'information. D'autre part, l'alerte $AL_i$ provoque

SP 2300 DC

l'intervention du maître qui est dispensé d'émettre INT1 et peut accéder sans délai à la mémoire, comme décrit précédemment, par le moyen de la ligne de sélection $SP_i$, dès qu'il est prêt à le faire.

SP 2300 DC

0109337

## REVENDICATIONS

1. Dispositif informatique à multi-micro-ordinateur pour le traitement d'images constitué par un certain nombre de micro-ordinateurs, comprenant chacun en propre une partie de la mémoire d'image et fonctionnant en parallèle, dits esclaves ($PE_i$), et par au moins un micro-ordinateur maître (PM) commandant et supervisant le fonctionnement desdits esclaves, les relations entre les différents micro-ordinateurs étant assurées par deux dispositifs distincts, à savoir d'une part un faisceau de conducteurs dit bus général (BG), sur lequel sont branchés en parallèle tous les micro-ordinateurs, comprenant un bus de données bidirectionnel et un bus unidirectionnel sur lequel le micro-ordinateur maître émet des signaux d'adresse et des signaux de commande, de façon indifférenciée, à destination des esclaves et, d'autre part, des conducteurs individuels placés chaque fois entre le micro-ordinateur maître et un esclave particulier, selon une structure dite en étoile, certains au moins de ces conducteurs en étoile permettant au micro-ordinateur maître d'émettre des signaux individuels de sélection ($SP_i$) à destination des esclaves pour spécifier lesquels de ces derniers sont concernés par les signaux de données, d'adresse et de commande circulant sur le bus général, caractérisé en ce que certains signaux d'adresse dits excédentaires émanant du micro-ordinateur maître et non utilisés pour l'adressage à l'intérieur des mémoires des esclaves, sont envoyés à de premiers moyens de décodage (DC2) fournissant une partie au moins des signaux de commande émis sur le bus unidirectionnel par le micro-ordinateur et à de seconds moyens de décodage (DC1) fournissant les signaux de sélection.

2. Dispositif selon la revendication 1, dans lequel le micro-ordinateur maître est du type dit segmenté, dans lequel les signaux d'adresse comprennent d'une part des signaux d'adresse en mémoire de type habituel et, d'autre part, des signaux spéciaux dits d'adresse de segment, caractérisé en ce que les signaux d'adresse excédentaires utilisés pour fournir les signaux de commande et de sélection sont prélevés au moins en partie parmi lesdits signaux d'adresse de segment.

3. Dispositif selon l'une ou l'autre des revendications 1 et 2, dans lequel existent, à côté d'un micro-ordinateur maître dit principal, un ou plusieurs dispositifs maîtres dits secondaires avec des moyens de commutation des signaux de données, d'adresse et de commande permettant à un maître secondaire de se substituer au maître principal sur le bus, caractérisé par des moyens de commutation (MUX) des signaux de sélection (SP) et, des moyens spécifiques de liaison (LL) entre ledit maître principal et le ou lesdits maîtres secondaires, grâce à quoi, à la suite d'un message sélectif émis par le maître principal sur lesdits moyens de liaison, les moyens de commutation (MUX) des signaux de sélection sont actionnés de telle sorte que le maître secondaire précité se trouve substitué au maître principal au centre de la structure en étoile.

4. Dispositif selon la revendication 3 dans lequel l'un des maîtres secondaires, pilote la saisie ou la restitution d'une image, caractérisé en ce que la structure en étoile comporte à destination de chaque processeur esclave un ou plusieurs conducteurs ($AP_i$) dits de partition permettant audit maître secondaire de spécifier individuellement la zone de la mémoire de chaque esclave où doivent se situer les données correspondant à l'image, et en ce que des moyens de commutation sont intercalés sur lesdits conducteurs de partition, au niveau de chaque processeur esclave, grâce à quoi lesdits conducteurs peuvent être utilisés accessoirement par les processeurs esclaves pour émettre des messages spécifiques ($AL_i$) à destination du maître principal.

5. Dispositif selon la revendication 3, caractérisé en ce que chaque esclave comporte de premiers moyens de commutation ($N_i$) grâce auxquels le micro-ordinaire maître (PM), ayant mis l'esclave ($PE_i$) en étant préparatoire par la combinaison de signaux de commande indifférenciés (INT1, INT2) émis sur le bus et de signaux de sélection ($SP_i$) émis sur l'étoile, peut obtenir instantanément l'accès au module de mémoire ($M_i$) dudit esclave ($PE_i$), de seconds moyens de commutation ($CO_i$) qui sont asservis à un signal (VID) qui assure l'exclusion entre le maître principal et le maître secondaire au centre de l'étoile, et qui est présent sur le bus, grâce à quoi des conducteurs bidirectionnels ($AA_i$) de l'étoile peuvent servir à transmettre des signaux de partition de mémoire ($AP_i$) du maître secondaire vers les esclaves, et des signaux d'alerte ($AL_i$) des esclaves vers le maître principal, et encore de troisièmes moyens de commutation ($OC_i$) grâce auxquels l'esclave peut agir soit à l'initiative du maître comme ci-dessus, soit de sa propre initiative, auquel cas les signaux de commande (INT1, INT2) provenant du maître par le bus restent momentanément inactifs et c'est le signal d'alerte ($AL_i$) en provenance de l'esclave qui place ce dernier en l'état préparatoire où le maître peut obtenir instantanément accès au module de mémoire ($M_i$) de l'esclave.

6. Dispositif selon l'une quelconque des revendications précédentes, caractérisé en ce que la

SP 2300 DC

0109337

structure en étoile comprend des conducteurs aptes à informer en permanence le micro-ordinateur maître de l'état des esclaves.

7. Dispositif selon l'une quelconque des revendications précédentes, caractérisé en ce que les moyens de décodage (DC1, DC2) du micro-ordinateur maître qui sont à l'origine des signaux de commande et de sélection des esclaves comprennent des moyens de mémorisation dont le contenu peut être modifié dynamiquement par ledit micro-ordinateur maître.

SP 2300 DC

FIG. 1

FIG. 4

FIG. 2

3/4

0109337

FIG. 3A

FIG. 3B